Europäisches Patentamt

(19) European Patent Office

Office européen des brevets

(11) Publication number: **0 191 713
B1**

# (12) EUROPEAN PATENT SPECIFICATION

(45) Date of publication of the patent specification:
22.03.89

(21) Application number: **86630006.4**

(22) Date of filing: **09.01.86**

(51) Int. Cl.⁴: **D 01 G 37/00, B 65 B 63/08,
B 30 B 9/30, A 01 F 15/00**

(54) **Conditioning baled material.**

(30) Priority: **10.01.85 AU 8833/85**

(43) Date of publication of application:
**20.08.86 Bulletin 86/34**

(45) Publication of the grant of the patent:
**22.03.89 Bulletin 89/12**

(84) Designated Contracting States:
**BE CH DE FR GB IT LI NL SE**

(56) References cited:
**DE-A- 1 792 251
US-A- 3 745 915
US-A- 3 881 222**

(73) Proprietor: **AUSTRALIAN WOOL CORPORATION,
369 Royal Parade, Parkville Victoria 3052 (AU)**

(72) Inventor: **Roder, Edward Alexander, 396 Pound Road,
Narre Warren Victoria 3805 (AU)**

(74) Representative: **Schmitz, Jean-Marie et al, OFFICE
DENNEMEYER S.à.r.l. P.O. Box 1502,
L-1015 Luxembourg (LU)**

ACTORUM AG

## Description

This invention relates to a method and apparatus for conditioning baled materials such as wool and other fibrous materials.

When wool is transported in bales to countries having cold climates, the wool is often frozen for considerable periods of the year. Similarly, when baled dumped wool is placed in long term storage, the fibre develops a set, the extent to which depends on the factors of time, temperature, density and moisture content. It will be appreciated that baled wool which has a high set factor caused by low temperatures or long term storage is extremely difficult to open for further processing and the wool must be left for considerable periods of time until the set in the wool eventually releases.

While it is known for example US-Patent 233 288 Seeland und Russian-Patent 166 588, to inject steam into frozen bales through a probe which penetrates the bale to speed the thawing process, thawing does not take place uniformly and difficulties are often experienced in obtaining adequate penetration of the probe due not only to the frozen state of the fibres but also to the high density of the fibres in the bale. Accordingly, the injection of steam in this manner is not a satisfactory solution to the problem of frozen bales and similarly does not provide a solution to the problem of opening high density long term storage bales.

It is accordingly the object of the present invention to provide a method and apparatus for conditioning baled materials in which the above problem is at least substantially ameliorated.

In a first aspect of the present invention, there is provided a method of conditioning baled materials comprising the step of forcing moisture laden heated air or steam under pressure having a relative humidity at least approximately 90% under pressure into the bale over part of the surface area of at least two sides of the bale so that said air/steam penetrates the material in the bale in a relatively uniform manner, said moisture laded heated air or steam being forced into said bale at a pressure which achieves said relatively uniform penetration of the material in the bale when said material is at a density of approximately 700 kg/m³ while keeping the temperature of said moisture laden heated air or steam within the range 80°C to 120°C.

In another aspect, the invention provides an apparatus for conditioning baled materials comprising at least two plenum pads, means for clamping said pads in sealing contact with at least two opposite sides of the surface of a bale to be treated, means for forcing moisture laden heated air or steam having a relative humidity at least of the order of 90% under pressure into said bale via said plenum pads whereby air/steam penetrates the material in said bale in a relatively uniform manner, said moisture laden heated air or steam being forced into said bale at a pressure which achieves said relatively uniform penetration of the material in the bale when said material is at a density of the order of 700 kg/m³ while keeping the temperature of said moisture laden heated air or steam within the range 80°C to 120°C.

In a preferred form ot the above defined aspects of the invention, the temperature is controlled at approximately 110°C.

At the present stage of development, a plenum pad clamping force of the order of 35 to 50 tonnes is sufficient to cause adequate sealing of the plenum pads in contact with the surface of the bale whereby substantially uniform penetration of the air/steam into the material in the bale is achieved.

In a particularly preferred form of the invention, plenum pads are clamped to the two opposed side surfaces of a bale and moisture laden air is caused to penetrate the fibres in the bale under the conditions outlined above. Experiments have shown that under these conditions the temperature of a bale having a fibre density of the order of 700 kg/m³ may be elevated from minus 20°C to 65°C in approximately 20 to 25 minutes. Similarly, other experiments have shown that long term storage bales which have previously been extremely difficult to open may be opened with relative ease after treatment according to the invention for a period of time of the order of that indicated above unter the conditions indicated above.

One presently preferred embodiment of the invention is shown schematically in the accompanying drawings, in which:

Fig. 1 is a front elevation of an apparatus embodying the invention;

Fig. 2 is a side elevation of the apparatus of Fig. 1; and

Fig. 3 shows the construction of one of the plenum pads used in the apparatus of Figs. 1 to 3.

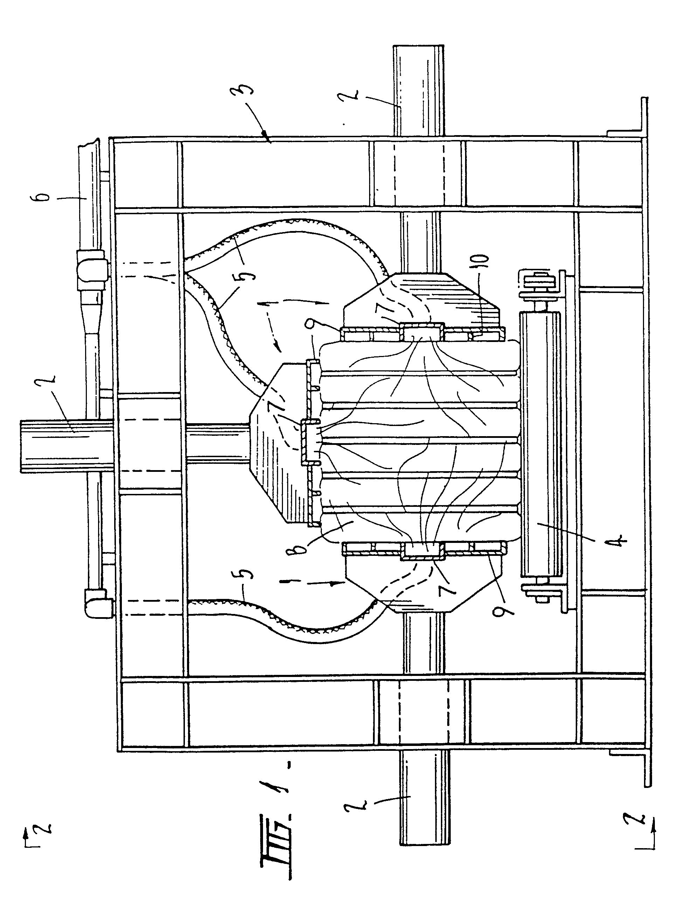

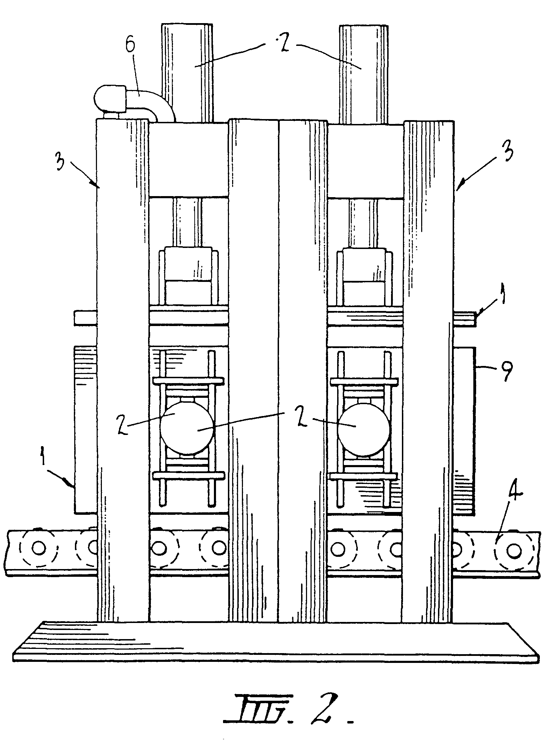

Referring firstly to Figs. 1 to 3 of the drawings, it will be noted that three plenum pads 1 are supported by pairs of clamping cylinders 2 which are in turn supported by a support frame 3 which straddles a conveyor 4 upon which a dumped bale B is supported for treatment. As indicated above, a clamping force of the order of 35 to 50 tonnes is applied between the opposed plenum pads and between the upper plenum pad and the conveyor 4. An air/steam mixture, which provides a relative humidity at least of the order of 90%, is delivered to each plenum paid 1 via flexible tubing 5 attached to supply piping 6 supported by the frame 3.

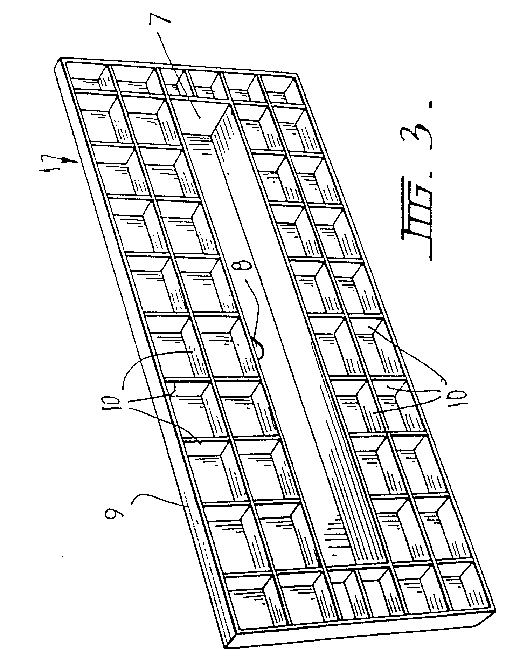

Referring now to Fig. 3 of the drawings, each plenum pad will be seen to comprise a central open ended channel 7 into which moisture laden heated air is delivered through an opening 8 via tubing 5. The channel 7 is surrounded by a frame 9 within which divider plates 10 form a honeycomb sealing structure. Although other methods of sealing the plenum pad may be adopted, it has been found that the honeycomb structure shown in Fig. 3 is both simple and effective.

Air heated to a temperature of between 80°C and 120°C, and most preferably around 110°C, is delivered to each plenum pad 1 under a pressure ot between 100 kPa to 200 kPa, and most preferably around 200 kPa, with a relative humidity of at least the order of 90%. The flow rate of the air will be determined by the permeability of the bale but flow rates of the order of 2,000 litres per minute have been experienced with bales of wool dumped to a density of 700 kg/m$^3$. The moisture laden air is delivered to each plenum pad 1 by means of a blower (not shown), such as a Rootes blower which forces the air over a suitable heat exchanger while injected steam delivers the required moisture content to increase the relative humidity to the above indicated level. The direction of penetration of the moisture laden air is shown schematically in Fig. 1 of the drawings.

Although the use of three plenum pads of the above type is preferred, acceptable results are achieved by the use of two opposed plenum pads between which the dumped bale is held under clamping forces of the order of those indicated above.

The apparatus shown in the accompanying drawings has been successfully tested with frozen dumped bales and with long term storage bales which were known from past experience to be difficult to open. In the case of frozen bales, it was found that a bale frozen to a temperature of −20°C could be elevated to a temperature of 65°C in approximately 20 to 25 minutes. Similarly, long term storage bales conditioned for a similar period were found to be sufficiently conditioned to be easy to open.

It has been found that the relative humidity of the moisture laden air or steam should be at least of the order of 90% otherwise the desired percentage regain in the wool of the order of 16% is not attained.

## Claims

1. A method of conditioning baled materials comprising the step of forcing moisture laden heated air or steam under pressure having a relative humidity at least approximately 90% under pressure into the bale over part of the surface area of at least two sides of the bale so that said air/steam penetrates the material in the bale in a relatively uniform manner, said moisture laden heated air or steam being forced into said bale at a pressure which achieves said relatively uniform penetration of the material in the bale when said material is at a density of approximately 700 kg/m$^3$ while keeping the temperature of said moisture laden heated air or steam within the range 80°C to 120°C.

2. The method of claim 1, wherein said temperature is approximately 110°C.

3. An apparatus for conditioning baled materials comprising at least two plenum pads, means for clamping said pads in sealing contact with at least two opposite sides of the surface of a bale to be treated, means for forcing moisture laden heated air or steam having a relative humidity at least of the order of 90% under pressure into said bale via said plenum pads whereby air/steam penetrates the material in said bale in a relatively uniform manner, said moisture laden heated air or steam being forced into said bale at a pressure which achieves said relatively uniform penetration of the material in the bale when said material is at a density of the order of 700 kg/m$^3$ while keeping the temperature of said moisture laden heated air or steam within the range 80°C to 120°C.

4. The apparatus of claim 3, wherein said temperature is controlled at approximately 110°C.

5. A method of conditioning a bale of compressed wool fibres comprising: applying a plenum pad to each of at least two opposite sides of the bale, each plenum pad having a peripheral edge structure and an open plenum portion surrounded by the edge structure and facing the respective side of the bale, said open plenum portion extending along a substantial portion of the respective side of the bale, forcing at least one of the plenum pads toward the other to clamp the bale between them and to force each edge structure into sealing engagement with the adjacent surface of the bale; and forcing moisture laden air or steam into the plenum chambers under pressure sufficient to cause the air or steam to pass through the surface of the bale and to penetrate the bale relatively uniformly, the air or steam having a relative humidity of at least approximately 90% and a temperature in the range of 80°C to 120°C.

6. The apparatus of claim 3 or 4, wherein said clamping is controlled to exert a clamping force of approximately 35 to 50 tonnes.

7. The apparatus of claim 4, wherein each plenum pad has a central channel into which said air is delivered, said channel being surrounded by a honeycomb sealing structure adapted to engage the surface of the bale when clamped and restrict the loss of air from said plenum pad.

## Patentansprüche

1. Verfahren zum Konditionieren von in Ballen verpackten Materialien, beinhaltend den Schritt des Pressens von feuchtigkeitshaltiger erhitzter Luft oder Dampf mit einer relativen Feuchtigkeit von wenigstens ungefähr 90% unter Druck in den Ballen über einem Teil der Oberfläche von wenigstens zwei Seiten des Ballens, so daß Luft/Dampf das Material in dem Ballen auf relativ gleichmäßige Weise durchdringt, wobei die feuchtigkeitshaltige erhitzte Luft oder der Dampf mit einem Druck in den Ballen gepreßt wird, aufgrund dessen die relativ gleichmäßige Durchdringung des Materials in dem Ballen erzielt wird, wenn das Material eine Dichte von ungefähr 700 kg/m$^3$ hat, während die Temperatur der feuchtigkeitshaltigen erhitzten Luft oder des Dampfes in dem Bereich von 80°C bis 120°C gehalten wird.

2. Verfahren nach Anspruch 1, wobei die Temperatur ungefähr 110°C beträgt.

3. Vorrichtung zum Konditionieren von in Ballen verpackten Materialien, mit wenigstens zwei Verteilerblöcken, Einrichtungen zum Drücken der Blöcke in Dichtkontakt mit wenigstens zwei entgegengesetzten Seiten der Oberfläche eines zu behandelnden Ballens, einer Einrichtung zum Drükken von feuchtigkeitshaltiger erhitzter Luft oder Dampf mit einer relativen Feuchtigkeit von wenigstens in der Größenordnung von 90 % unter Druck in den Ballen über die Verteilerblöcke, wodurch Luft/Dampf das Material in dem Ballen auf eine relativ gleichmäßige Weise durchdringt, wobei die feuchtigkeitshaltige erhitzte Luft oder der Dampf in den Ballen mit einem Druck gedrückt wird, aufgrund dessen das relativ gleichmäßige Durchdringen des Materials in dem Ballen erzielt wird, wenn das Material eine Dichte in der Größenordnung von 700 kg/m³ hat, während die Temperatur der feuchtigkeitshaltigen erhitzten Luft oder des Dampfes in dem Bereich von 80°C bis 120°C gehalten wird.

4. Vorrichtung nach Anspruch 3, wobei die Temperatur auf ungefähr 110°C geregelt wird.

5. Verfahren zum Konditionieren eines Ballens von komprimierten Wollfasern, beinhaltend: Aufbringen eines Verteilerblockes auf jede von wenigstens zwei entgegengesetzten Seiten des Ballens, wobei jeder Verteilerblock ein Umfangsrandgebilde und einen offenen Verteilerabschnitt hat, welcher von dem Randgebilde umgeben ist und der zugeordneten Seite des Ballens zugewandt ist, wobei sich der offene Verteilerabschnitt über einen wesentlichen Teil der zugeordneten Seite des Ballens erstreckt, Drücken wenigstens eines der Verteilerblöcke in Richtung. zu dem anderen, um den Ballen zwischen ihnen einzuspannen und jedes Randgebilde in abdichtende Berührung mit der benachbarten Oberfläche des Ballens zu drücken; und Drücken von feuchtigkeitshaltiger Luft oder Dampf in die Verteilerkammern unter ausreichendem Druck, um die Luft oder den Dampf zu veranlassen, durch die Oberfläche des Ballens hindurchzugehen und relativ gleichmäßig in den Ballen einzudringen, wobei die Luft oder der Dampf eine relative Feuchtigkeit von wenigstens ungefähr 90% und eine Temperatur in dem Bereich von 80°C bis 120°C hat.

6. Vorrichtung nach Anspruch 3 oder 4, dadurch gekennzeichnet, daß das Einspannen so gesteuert wird, daß eine Einspannkraft von ungefähr 35 bis 50 Tonnen ausgeübt wird.

7. Vorrichtung nach Anspruch 4, wobei jeder Verteilerblock einen zentralen Kanal hat, in den die Luft eingeleitet wird, wobei der Kanal von einem Wabendichtgebilde umgeben ist, das die Oberfläche des Ballens erfaßt, wenn dieser eingespannt wird, und den Verlust an Luft aus dem Verteilerblock begrenzt.

**Revendications**

Procédé de conditionnement de matières sous forme de balles, ce procédé comprenant l'étape consistant à insuffler, sous pression, de l'air chauffé et chargé d'humidité, ou de la vapeur d'eau soumise une pression présentant un taux d'humidité relative d'environ au moins 90%, dans la balle, sur une partie de la surface spécifique d'au moins deux côtés de la balle, si bien que ce mélange air/vapeur d'eau pénètre dans la matière se trouvant dans la balle, d'une façon relativement uniforme, caractérisé en ce que cet air chauffé et chargé d'humidité ou cette vapeur d'eau est insufflé dans la balle sous une pression permettant d'obtenir une pénétration relativement uniforme de la matière se trouvant dans la balle, lorsque le taux de densité de cette matière est approximativement de 700 kg/m³, tandis que la température de cet air chauffé et chargé d'humidité ou de cette vapeur d'eau est maintenue dans l'intervalle compris entre 80°C et 120°C.

2. Procédé selon la revendication 1, caractérisé en ce que la température est d'environ 110°C.

3. Appareil pour le conditionnement de matières sous forme de balles, cet appareil comportant au moins deux tampons d'accumulation, des moyens afin de serrer ces tampons en contact d'étanchéité avec au moins deux côtés opposés de la surface d'une balle à traiter, des moyens pour insuffler, sous pression, l'air chauffé et chargé d'humidité, ou la vapeur d'eau présentant un taux d'humidité relative de l'ordre d'au moins 90%, dans cette balle, via ces tampons d'accumulation, le mélange air/vapeur d'eau étant amené à pénétrer la matière contenue dans la balle d'une façon relativement uniforme, caractérisé en ce que cet air chauffé et chargé d'humidité ou cette vapeur d'eau est chargé dans la balle sous une pression permettant d'obtenir une pénétration relativement uniforme de la matière se trouvant dans la balle, lorsque le taux de densité de cette matière est approximativement de 700 kg/m³, tandis que la température de cet air chauffé et chargé d'humidité, ou de cette vapeur d'eau, est maintenue dans l'intervalle compris entre 80°C et 120°C.

4. Appareil selon la revendication 3, caractérisé en ce que la température est réglée à environ 110°C.

5. Procédé de conditionnement d'une balle de fibres de laine comprimées, ce procédé comprenant les étapes consistant à: appliquer un tampon d'accumulation sur chacun d'au moins deux côtés opposés de la balle, chaque tampon d'accumulation ayant une structure marginale de forme périphérique, ainsi qu'une partie ouverte d'accumulation entourée par cette structure marginale et faisant face au côté respectif de la balle, cette partie ouverte d'accumulation s'étendant le long d'une partie importante du côté respectif de la balle; presser au moins un des tampons d'accumulation en direction de l'autre, afin d'enserrer la balle entre eux et de comprimer chaque structure marginale en l'engageant hermétiquement sur la surface adjacente de la balle; chasser l'air chauffé et chargé d'humidité, ou la vapeur l'eau, dans les collecteurs d'accumulation, sous une pression suffisante pour permettre à l'air ou à la vapeur d'eau de traverser la surface de la balle et de pénétrer dans celle-ci de façon relativement uniforme, l'air ou la vapeur d'eau présentant un taux d'humidité relative d'au moins d'environ 90% et une température de l'ordre de 80°C à 120°C.

6. Appareil selon la revendication 3 ou 4, caractérisé en ce que le serrage est réglé pour exercer une force d'environ 35 à 50 tonnes.

7. Appareil selon la revendication 4, caractérisé en ce que chaque tampon d'accumulation est muni d'un conduit central par lequel l'air est distribué, ce conduit étant entouré d'une structure d'étanchéité en nid d'abeilles, prévue pour venir s'engager sur la surface de la balle, lorsque celle-ci est enserrée et ainsi réduire la perte d'air à partir de ce tampon d'accumulation.

FIG. 1

EP 0191713 B1

$\overline{\text{JIG}}.~2.$

FIG. 3.